# EUROPEAN PATENT APPLICATION

(11) **EP 4 583 236 A1**
(43) Date of publication of application: **09.07.2025**
(21) Application number: 24853007.3
(22) Date of filing: 22.08.2024
(51) Int. Cl.: H01M 10/0585

(54) **STACKED BATTERY CELL, SQUARE LITHIUM BATTERY, AND BATTERY PACK**

(30) Priority: 21.11.2023 CN 202311566713
(71) Applicant: Eve Power Co., Ltd., Jingmen, Hubei 448000 (CN)
(72) Inventor: XIA, Yang, Jingmen, Hubei 448000 (CN); CHE, Liyuan, Jingmen, Hubei 448000 (CN); YANG, Jie, Jingmen, Hubei 448000 (CN); WANG, Xiaokun, Jingmen, Hubei 448000 (CN); WU, Tingting, Jingmen, Hubei 448000 (CN); WEN, Shengyao, Jingmen, Hubei 448000 (CN); YUAN, Dingding, Jingmen, Hubei 448000 (CN); HE, Wei, Jingmen, Hubei 448000 (CN)
(74) Representative: Berggren Oy
(86) International application number: PCT/CN2024/113981
(87) International publication number: WO 2025/107768

(57) **Abstract**

A laminated cell, a prismatic lithium battery and a battery pack are provided. By controlling the size of the positive electrode plate and the size of the negative electrode plate, it is ensured that the laminated cell has acceptable internal resistance, which can improve the actual capacity, energy density, rate performance and cycle stability of the prismatic lithium battery including the laminated cell, and can improve the safety of the prismatic lithium battery.

## Description

### CROSS REFERENCE TO RELATED APPLICATIONS

This application claims priority to and the benefit of Chinese Patent Application No. 202311566713.X, filed on November 21, 2023, the disclosure of which is incorporated herein by reference in its entirety.

### TECHNICAL FIELD

The present disclosure relates to the field of lithium battery technology, and in particular, to a laminated cell, a prismatic lithium battery and a battery pack.

### BACKGROUND

With continuous development of portable electronic devices, new energy vehicles and large-scale energy storage markets, the demand for lithium batteries continues to grow. The size of the electrode plate of the lithium battery will affect the performance of the lithium battery in actual application. For example, the internal resistance of the lithium battery is not only related to the length of the electrode plate, but also related to the thickness of the electrode plate. Under the premise that the length and width of the electrode plate are constant, the thicker the electrode plate, the longer the diffusion distance of lithium ions and the greater the internal resistance of the cell. On the contrary, under the premise that the length and width of the electrode plate are constant, the thinner the electrode plate, the lower the internal resistance of the cell. However, if the electrode plate is too thin, it will lead to a decrease in the energy density of the lithium battery.

### SUMMARY

It is of great significance to the application and development of the lithium battery to adjust the size of the electrode plate so that the lithium battery can both have low cell internal resistance and high energy density.

The present disclosure provides a laminated cell, the laminated cell includes a plurality of cell units stacked in sequence along a first direction, each of the cell units includes a positive electrode plate, a separator and a negative electrode plate that are stacked in sequence, and a separator is disposed between two adjacent ones of the cell units, the first direction is perpendicular to a first surface of the positive electrode plate close to the separator, the positive electrode plate of each of the cell units is provided with a sub-tab, and the negative electrode plate of each of the cell units is provided with a sub-tab; a plurality of sub-tabs of a plurality of positive electrode plates of the plurality of cell units are connected in sequence to form a positive electrode tab, and a plurality of sub-tabs of a plurality of negative electrode plates of the plurality of cell units are connected in sequence to form a negative electrode tab; and a ratio of a length to a thickness of the positive electrode plate and a ratio of a length to a thickness of the negative electrode plate are respectively and independently selected from 6.3×10² to 9.4×10², and a ratio of a width to the thickness of the positive electrode plate and a ratio of a width to the thickness of the negative electrode plate are respectively and independently selected from 6.3×10² to 9.4×10².

The present disclosure further provides a prismatic lithium battery, the prismatic lithium battery includes one or more laminated cells, each of the one or more laminated cells includes a plurality of cell units stacked in sequence along a first direction, each of the cell units includes a positive electrode plate, a separator and a negative electrode plate that are stacked in sequence, and a separator is disposed between two adjacent ones of the cell units, the first direction is perpendicular to a first surface of the positive electrode plate close to the separator, the positive electrode plate of each of the cell units is provided with a sub-tab, and the negative electrode plate of each of the cell units is provided with a sub-tab; a plurality of sub-tabs of a plurality of positive electrode plates of the plurality of cell units are connected in sequence to form a positive electrode tab, and a plurality of sub-tabs of a plurality of negative electrode plates of the plurality of cell units are connected in sequence to form a negative electrode tab; and a ratio of a length to a thickness of the positive electrode plate and a ratio of a length to a thickness of the negative electrode plate are respectively and independently selected from 6.3×10² to 9.4×10², and a ratio of a width to the thickness of the positive electrode plate and a ratio of a width to the thickness of the negative electrode plate are respectively and independently selected from 6.3×10² to 9.4×10².

The present disclosure further provides a battery pack, the battery pack includes a box and a plurality of prismatic lithium batteries, the box is provided with an accommodating space, and the plurality of the prismatic lithium batteries are arranged in sequence in the accommodating space; each of the prismatic lithium batteries includes one or more laminated cells, each of the one or more laminated cells includes a plurality of cell units stacked in sequence along a first direction, each of the cell units includes a positive electrode plate, a separator and a negative electrode plate that are stacked in sequence, and a separator is disposed between two adjacent ones of the cell units, the first direction is perpendicular to a first surface of the positive electrode plate close to the separator, the positive electrode plate of each of the cell units is provided with a sub-tab, and the negative electrode plate of each of the cell units is provided with a sub-tab; a plurality of sub-tabs of a plurality of positive electrode plates of the plurality of cell units are connected in sequence to form a positive electrode tab, and a plurality of sub-tabs of a plurality of negative electrode plates of the plurality of cell units are connected in sequence to form a negative electrode tab; and a ratio of a length to a thickness of the positive electrode plate and a ratio of a length to a thickness of the negative electrode plate are respectively and independently selected from 6.3×10² to 9.4×10², and a ratio of a width to the thickness of the positive electrode plate and a ratio of a width to the thickness of the negative electrode plate are respectively and independently selected 6.3×10² to 9.4×10².

### Beneficial effects

In the laminated cell provided by the present disclosure, the sizes of the positive electrode plate and the negative electrode plate are controlled to ensure that the laminated cell has acceptable internal resistance.

The prismatic lithium battery provided by the present disclosure includes one or more laminated cells described above, which improves the actual capacity, energy density, rate performance and cycle stability of the square lithium battery, and is conducive to improving the safety of the prismatic lithium battery.

The battery pack provided in the present disclosure includes a box and a plurality of prismatic lithium batteries described above. The plurality of prismatic lithium batteries are sequentially arranged in an accommodating space of the box, which improves the internal space utilization and endurance of the battery pack.

### BRIEF DESCRIPTION OF THE DRAWINGS

FIG. 1 is a schematic diagram of a structure of a laminated cell according to some implementations of the present disclosure.
FIG. 2 is a schematic diagram of a structure of a positive electrode plate according to some implementations of the present disclosure.
FIG. 3 is a schematic diagram of a structure of a prismatic lithium battery according to some implementations of the present disclosure.
FIG. 4 is a schematic diagram of a structure of a battery pack according to some embodiments of the present disclosure.

Reference numerals are as follows:
1: Battery pack, 10: Prismatic lithium battery, 20: Box, 30: Cover body, 40: Buffer member, 101: Laminated cell, 102: Housing, 103: Positive electrode pole, 104: Negative electrode pole, 105 : Connecting piece, 201: Accommodating space, 202: Box wall, 1011: Cell unit, 1012: Positive electrode tab, 1013: Negative electrode tab, 10111: Positive electrode plate, 10112: Separator, 10113: Negative electrode plate, 101110: Sub-tab, 101111: First surface, 101112: Positive electrode current collector, 101113: Positive electrode active material layer..

### DETAILED DESCRIPTION

RThe technical solutions in the embodiments of the present disclosure will be clearly and completely described below with reference to the accompanying drawings in the embodiments of the present disclosure. It is apparent that the embodiments described are only part of the embodiments of the present disclosure, but not all the embodiments of the present disclosure. Based on the embodiments in the present disclosure, all other embodiments obtained by those skilled in the art without making creative efforts fall within the scope of protection of the present disclosure.

Unless otherwise defined, all professional and scientific terms used herein have the same meaning as familiar to those skilled in the art, and the materials or reagents used in the embodiments and comparative examples of the present disclosure are commercially available. In addition, any methods and materials that are similar or equivalent to those described herein can be used in the present disclosure. The preferred implementing methods and materials in the specification are for demonstration purposes only, but do not limit the content of the present disclosure.

It should be noted that the order of description of the following embodiments does not limit the preferred order of the embodiments. Each embodiment of the present disclosure may exist in the form of a range. It should be understood that the description in the form of a range is for convenience and simplicity and should not be understood as a hard limit to the scope of the present disclosure. Therefore, the description of the range should be considered to have been specifically disclosed all possible sub-ranges and single numbers within that range. For example, the description of a range from 1 to 6 should be considered to have specifically disclosed the sub-ranges, such as sub-ranges from 1 to 3, from 1 to 4, from 1 to 5, from 2 to 4, from 2 to 6, from 3 to 6, and the like, and single numbers within the range, such as 1, 2, 3, 4, 5, and 6, which applies regardless of the ranges. In addition, whenever a numerical range is indicated herein, it is intended to include any cited numbers (a fraction or an integer) within the indicated range.

In the description of the present disclosure, the term "include" means "including but not limited to".

The terms "multiple kinds", "multiple times" or similar expressions refer to two kinds (times) or more than two kinds (times), for example, it can be two kinds (times), three kinds (times), four kinds (times), five kinds (times), six kinds (times), and the like.

The selection scope of the term "and/or" includes any one of two or more related listed items, and also includes any and all combinations of the related listed items. Any and all combinations include combinations of any two related listed items, any multiple related listed items, or all related listed items. For example, "A and/or B" includes three parallel solutions: A, B, and A+B. For another example, the technical solutions of "A, and/or, B, and/or, C, and/or, D" include any one of A, B, C, and D (that is, technical solutions connected by "logical or"), also include any and all combinations of A, B, C and D, that is, combinations of any two or any three of A, B, C, and D, and further include the combination of four of A, B, C, and D (that is, technical solutions connected by "logical and").

The term "solid content" refers to the proportion of the mass of solids in the slurry to the total mass of the slurry.

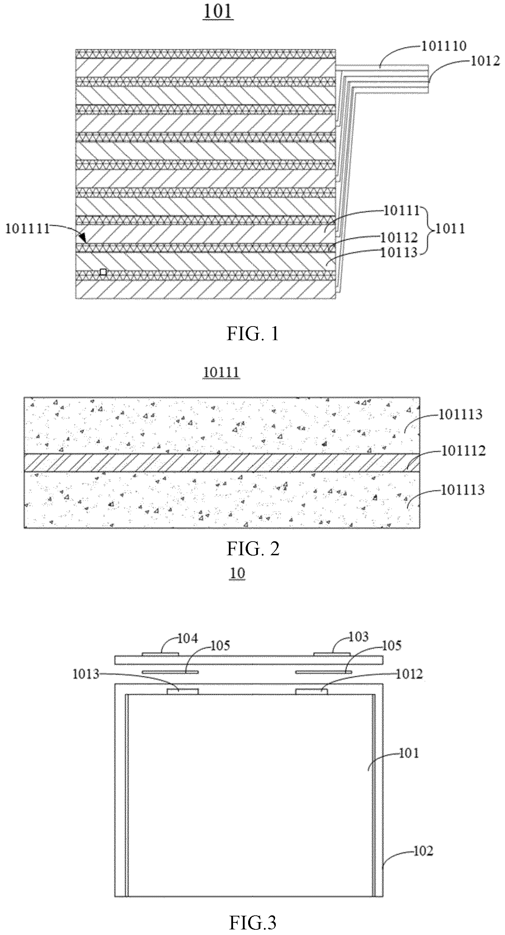

The embodiments of the present disclosure provide a laminated cell. As shown in FIG. 1 and FIG. 3, the laminated cell 101 includes a plurality of cell units 1011 stacked sequentially along the first direction X1. Each of the cell units 1011 includes a positive electrode plate 10111, a separator 10112 and a negative electrode plate 10113 that are stacked in sequence, and a separator 10112 is disposed between two adjacent cell units 1011. The first direction X1 is perpendicular to the first surface 101111 of the positive electrode plate 10111 close to the separator 10112. The positive electrode plate 10111 of each cell unit 1011 is provided with a sub-tab 101110 (sub-tab of the positive electrode plate), and the negative electrode plate 10113 of each cell unit 1011 is provided with a sub-tab 101110 (sub-tab of the negative electrode plate). The sub-tabs 101110 of the positive electrode plates 10111 of the plurality of cell units 1011 are connected in sequence to form the positive electrode tab 1012, and the sub-tabs 101110 of the negative electrode plates 10113 of the plurality of cell units 1011 are connected in sequence to form the negative electrode tab 1013. It should be noted that the surface of the electrode plate located on the outermost layer of the laminated cell 101 is also provided with the separator 10112.

The length of the positive electrode plate 10111 and the length of the negative electrode plate 10113 are independently and respectively selected from 135 mm to 165 mm. For example, they can be independently and respectively selected from 135 mm to 140 nm, 135 mm to 145 mm, 135 mm to 150 mm, 135 mm to 155 mm, 135 mm to 160 mm, 145 mm to 150 mm, 145 mm to 155 mm, 145 mm to 160 mm, 145 mm to 165 mm, 150 mm to 155 mm, 150 mm to 160 mm, 150 mm to 165 mm, 155 mm to 160 mm, 155 mm to 165 mm, or 160 mm to 165 mm, examples are 135 mm, 140 nm, 145 mm, 151 mm, 155 mm, 160 mm, 165 mm or a value between any two of the values describe above.

The width of the positive electrode plate 10111 and the width of the negative electrode plate 10113 are independently and respectively selected from 135 mm to 165 mm. For example, they can be independently and respectively selected from 135 mm to 140 nm, 135 mm to 145 mm, 135 mm to 150 mm, 135 mm to 155 mm, 135 mm to 160 mm, 145 mm to 150 mm, 145 mm to 155 mm, 145 mm to 160 mm, 145 mm to 165 mm, 150 mm to 155 mm, 150 mm to 160 mm, 150 mm to 165 mm, 155 mm to 160 mm, 155 mm to 165 mm, or 160 mm to 165 mm, examples are 135 mm, 140 nm, 145 mm, 148 mm, 155 mm, 160 mm, 165 mm or a value between any two of the values described above.

The ratio of the length to the thickness of the positive electrode plate 10111 and the ratio of the length to the thickness of the negative electrode plate 10113 are respectively and independently selected from 6.3×10² to 9.4×10², for example, they can be respectively and independently selected from 6.3×10² to 8.0×10², 6.3×10² to 7.5×10², 7.7×10²~8.5× 10², or 8.0×10²~8.5×10², examples are 6.3×10², 6.5×10², 7.0×10², 7.4×10², 7.7×10², 8.0×10², 8.5×10², 9.0×10², 9.4×10² or a value between any two of the values described above. The ratio of the width to the thickness of the positive electrode plate 10111 and the ratio of the width to the thickness of the negative electrode plate 10113 are respectively and independently selected from 6.3×10² to 9.4×10², for example, they can be respectively and independently selected from 6.3×10², 6. 5×10², 7.0×10², 7.4×10², 7.7×10², 8.0×10², 8.5×10², 9.0×10², 9.4×10² or a value between any two of the values described above.

It should be noted that, as shown in FIG. 2, the positive electrode plate 10111 includes a positive electrode current collector 101112 and a positive electrode active material layer 101113. The positive electrode active material layer 101113 is disposed on the surface of the positive electrode current collector 101112. Under the premise that the thickness of the positive electrode current collector 101112 is a constant value and all other structures and compositions of the lithium battery except the positive electrode plate 10111 remain unchanged, the thicker the thickness of the positive electrode active material layer 101113, the greater the internal resistance of the cell, the longer the ion diffusion distance in the corresponding lithium battery, and the greater the impedance of the lithium battery. The thinner the thickness of the positive electrode active material layer 101113, the smaller the internal resistance of the cell, and the battery capacity of the corresponding lithium battery decreases. It is required to increase the number of positive electrode plates 10111 to increase the battery capacity to the preset value, resulting in the increase of the amount of foil used for the positive electrode current collector 101112, thereby increasing the weight and manufacturing cost of the lithium battery, and causing a reduction in the energy density of the lithium battery. In the same way, the negative electrode plate includes a negative electrode current collector and a negative electrode active material layer, and the negative electrode active material layer is disposed on the surface of the negative electrode current collector. Under the premise that the thickness of the negative electrode current collector is a constant value and all other structures and compositions of the lithium battery except the negative electrode plate remain unchanged, the thicker the thickness of the negative electrode active material layer, the greater the internal resistance of the cell, and the greater the impedance of the corresponding lithium battery. The thinner the thickness of the negative electrode active material layer, the smaller the internal resistance of the cell, and the battery capacity of the corresponding lithium battery decreases. It is required to increase the number of negative electrode plates to increase the battery capacity to the preset value, resulting in the increase of the amount of foil used for the negative electrode current collector, thereby increasing the weight and manufacturing cost of the lithium battery, and causing a reduction in the energy density of the lithium battery.

Based on the above, in the laminated cell 101 of the embodiments of the present disclosure, under the premise that the length of the positive electrode plate 10111 and the length of the negative electrode plate 10113 are respectively controlled in the range of 135 mm to 165 mm, the width of the positive electrode plate 10111 and the width of the negative electrode plate 10113 are respectively controlled in the range of 135 mm to 165 mm, and the ratio of the length to the thickness and the ratio of the width to the thickness of the electrode plate are within the above range, it can be ensured that the laminated cell 101 has an acceptable internal resistance, and the lithium battery including the laminated cell 101 has good energy density.

In order to make the lithium battery have both low cell internal resistance and high energy density, in some embodiments of the present disclosure, the thickness of the positive electrode plate 10111 and the thickness of the negative electrode plate 10113 are respectively and independently selected from 180 µm to 215 µm. For example, they can be respectively and independently selected from 180 µm to 190 µm, 180 µm to 200 µm, 180 µm to 210 µm, 190 µm to 200 µm, 190 µm to 210 µm, 190 µm to 215 µm, 200 µm to 210 µm, or 210 µm to 215 µm, examples are 180 µm, 185 µm, 190 µm, 193 µm, 197 µm, 200 µm, 205 µm, 210 µm, 215 µm, or a value between any two of the values described above.

In order to improve the actual capacity and cycle life of the lithium battery including the laminated cell 101, in some embodiments of the present disclosure, referring again to FIG. 2, the material of the positive electrode active material layer 101113 includes lithium iron manganese phosphate material. The general chemical formula of the lithium iron manganese phosphate material is LiₐMnₓFe_{y}M_{z}(PO₄)_{b}, wherein a, x, y, z and b respectively represent the molar amount of the corresponding element, the value of the sum of x, y and z is c; M is selected from one or more of Mg, Ca, Sr, Co, Ti, Zr, Mo, V, Nb, Nd, Y, Ni, Sc, Cr, Cu, Zn, Be, La and Al.

In the general chemical formula LiₐMnₓFe_{y}M_{z}(PO₄)_{b}, 0.10≤x≤0.70, and x is, for example, 0.10, 0.20, 0.30, 0.40, 0.50, 0.60, 0.70 or a value between any two of the values described above. It should be noted that the higher x is, the higher the molar content of Mn in the lithium iron manganese phosphate material is, and the higher the average voltage of the positive electrode plate 10111 is. If x is greater than 0.7, there may be a phenomenon of weakened lithium ion diffusion in practical applications, resulting in a decrease in the conductivity of the positive electrode plate 10111 and a decrease in the power of the lithium battery containing the laminated cell 101.

In order to increase the average voltage of the positive electrode plate 10111 and ensure that the positive electrode plate 10111 has good conductivity, thereby improving the electrochemical performance of the laminated 101, in some embodiments of the present disclosure, 0.10≤x≤0.68, 0.26≤ x≤0.68, or 0.4≤x≤0.68.

In the general chemical formula LiₐMnₓFe_{y}M_{z}(PO₄)_{b}, the ratio of a to c is a/c, and 1.01≤a/c≤1.10. For example, a/c can be 1.01 to 1.03, 1.01 to 1.05, 1.01 to 1.08, 1.015 to 1.035, 1.035 to 1.05, 1.035 to 1.08, 1.035 to 1.10, 1.05 to 1.08, or 1.05 to 1.10, examples are 1.01, 1.02, 1.03, 1.04, 1.05, 1.06, 1.07, 1.08, 1.09, 1.10 or a value between any two of the values described above. If a/c is less than 1.01 (i.e., the content of Li is low), the actual gram capacity of the lithium iron manganese phosphate material will be reduced. If a/c is greater than 1.10 (i.e., the content of Li is high), when subject to water infiltration, the amount of residual alkali on the surface of the lithium iron manganese phosphate material will increase. If the amount of residual alkali is too high, the lithium battery will be "swollen", resulting in a decrease in the cycle performance of the prismatic lithium battery.

The stoichiometry of phosphorus is one of the critical factors affecting the performance of the lithium iron manganese phosphate material. In order to ensure that the lithium battery containing the lithium iron manganese phosphate material has good rate performance and cycle stability, in the general chemical formula LiₐMnₓFe_{y}M_{z}(PO₄)_{b}, the ratio of a to b is a/b, and 0.95<a/b<1.10, for example, it can be 0.95<a/b≤1.00, 0.95<a/b≤1.03, 0.95<a/b ≤1.05, 0.95<a/b ≤1.08, 1.00≤a/b≤1.03, 1.00≤a/b ≤1.08, 1.00≤a/b<1.10, or 1.03<a/b<1.10. Examples of a/b are 0.96, 0.98, 1.00, 1.01, 1.02, 1.03, 1.05, 1.08, 1.10, or a value between any two of the values described above; The ratio of c to b is c/b, and 0.90<c/b<1.10, for example, it can be 0.90<c/b≤1.00, 0.90<c/b≤1.01, 0.90<c/b<1.02, 0.90<c/b ≤1.05, 0.90<c/b≤1.07, 0.90<c/b≤1.09, or 0.95 ≤c/b ≤1.10. Examples of c/b are 0.91, 0.93, 0.95, 0.97, 0.99, 1.00, 1.01, 1.02, 1.05, 1.07, 1.10, or a value between any two the values described above.

The element type of M is one of the critical factors affecting the performance of the lithium iron manganese phosphate material. For example: if M is selected from Mg, it can improve the sintering property of the lithium iron manganese phosphate material, which is beneficial to improving the rate performance of the lithium battery including the lithium iron manganese phosphate material. Under the premise that M is a specific element type, the molar amount of M will also affect the performance of the lithium iron manganese phosphate material. In order to ensure that M has a good modifying effect on the lithium iron manganese phosphate material, and to avoid poor electrochemical performance caused by excessive molar amount of M, 0.01≤z≤0.12. For example, it can be 0.01≤z≤0.03, 0 .01≤z≤0.05, 0.01≤z≤0.08, 0.01≤z≤0.10, 0.05≤z≤0.08, or 0.05≤z≤0.12, examples are 0.01, 0.02, 0.03, 0.05, 0.08, 0.10, 0.12 or a value between any two of the values described above.

In order to improve the electron transmission efficiency and ion conductivity of the lithium iron manganese phosphate material, in some embodiments of the present disclosure, the surface of the lithium iron manganese phosphate material is provided with a cladding layer. The material of the cladding layer includes a carbon material, and the mass of the carbon materials accounts for 0.5% to 3% of the sum of the mass of the carbon material and the mass of the lithium iron manganese phosphate material. It should be noted that the cladding layer further has a protective effect on the lithium iron manganese phosphate material and can address the dissolution problem of Fe and Mn caused by the infiltration of the lithium iron manganese phosphate material by moisture (such as electrolyte). The thickness of the cladding layer is, for example, 3 nm to 5 nm.

The embodiments of the present disclosure further provide a method for preparing the lithium iron manganese phosphate material, which can be used to prepare any of the lithium iron manganese phosphate materials described above. The method includes the following steps.
S1. Providing a first slurry including lithium source, manganese source, iron source, phosphorus source and M source.
S2. Grinding the first slurry to obtain a second slurry.
S3. Spray drying the second slurry to obtain a pre-sintering material.
S4. Performing sintering treatment on the pre-sintering material to obtain a lithium iron manganese phosphate material.

Specifically, in step S1, each raw material can be selected according to conventional methods in the art. The lithium source may be one or more of lithium oxide, lithium hydroxide, and lithium salt. The lithium oxide includes but is not limited to Li₂O. The anions generated by the ionization of the lithium salt include but are not limited to one or more of oxalate ions, carbonate ions, sulfate ions, nitrate ions, acetate ions, halide ions, phosphate ions, and dihydrogen phosphate ions. Examples of lithium salt are one or more of lithium carbonate, lithium sulfate, lithium nitrate, lithium acetate, lithium dihydrogen phosphate, lithium phosphate and lithium oxalate.

The manganese source may be one or more of manganese oxide, manganese hydroxide, and manganese salt. The manganese oxide includes but is not limited to one or more of manganese monoxide, manganese dioxide, and manganese tetroxide. The anions generated by ionization of manganese salt include but are not limited to one or more of oxalate ions, carbonate ions, sulfate ions, nitrate ions, acetate ions, halide ions, and phosphate ions. Examples of the manganese source are one or more of manganese carbonate, manganese phosphate, manganese oxalate, manganese nitrate, manganese acetate, manganese sulfate and manganese chloride.

The iron source may be one or more of iron oxide, iron hydroxide and iron salt. The iron oxide includes but is not limited to one or more of ferroferric oxide, ferric oxide and ferrous oxide. The anions generated by the ionization of the iron salt include but are not limited to oxalate ions, carbonate ions, sulfate ions, nitrate ions, acetate ions, halide ions, and phosphate ions. Examples of the iron salt are one or more of ferrous sulfate, ferric chloride, ferrous phosphate, iron phosphate, ferrous pyrophosphate, ferric pyrophosphate, ferric nitrate, ferric acetate, ferric citrate, ferrous oxalate and ferrous chloride.

The phosphorus source includes but is not limited to one or more of phosphoric acid and metal salts containing phosphorus. The metal salts containing phosphorus include but are not limited to one or more of ammonium phosphate, ammonium dihydrogen phosphate, potassium dihydrogen phosphate, sodium dihydrogen phosphate, and iron phosphate.

The M source is, for example, a compound including one or more of Mg, Ca, Sr, Co, Ti, Zr, Mo, V, Nb, Nd, Y, Ni, Sc, Cr, Cu, Zn, Be, La and Al, the compound can be an oxide, hydroxide or metal salt compound. Taking the M source as a titanium source as an example, the titanium source can be one or more of titanium oxide, metatitanic acid, tetrabutyl titanate, titanium hydroxide and titanium salt. The titanium oxide includes but is not limited to TiO₂. The anions generated by the ionization of the titanium salt include but are not limited to one or more of oxalate ions, carbonate ions, sulfate ions, nitrate ions, acetate ions, halide ions, and phosphate ions. Examples of the titanium salt are one or more of titanium sulfate, titanium nitrate and titanium chloride. Taking the M source as a cobalt source as an example, the cobalt source includes but is not limited to one or more of tricobalt tetraoxide, cobalt nitrate, cobalt oxide, cobalt acetate and cobalt phosphate. Taking the M source as a nickel source as an example, the nickel source includes but is not limited to one or more of nickel oxide (Ni₂O₃), nickel oxide (NiO), nickel nitrate, nickel acetate and nickel phosphate. Taking the M source as a magnesium source as an example, the magnesium source includes but is not limited to one or more of magnesium oxide, magnesium chloride, magnesium sulfate, magnesium nitrate and magnesium acetates. Taking the M source as a zinc source as an example, the zinc source includes but is not limited to one or more of zinc oxide, zinc nitrate, zinc sulfate, zinc chloride and zinc acetate. Taking the M source as the vanadium source as an example, the vanadium source includes but is not limited to one or more of vanadium oxide, vanadium pentoxide, vanadium trioxide, vanadium nitrate and vanadium acetate. Taking the D source as a niobium source as an example, the niobium source includes but is not limited to one or more of niobium pentoxide, niobium hydroxide, niobium oxalate, niobium acetate and niobium nitrate.

It should be noted that if the surface of the prepared lithium iron manganese phosphate material is provided with a cladding layer, the first slurry further includes a carbon source, and the carbon source can be one or more of an inorganic carbon source and an organic carbon source. The inorganic carbon source includes but is not limited to one or more of graphene, carbon nanotube and graphite. The organic carbon source includes but is not limited to one or more of glucose, sucrose, lactose, starch, organic acids, vitamins and phenolic resins. The carbon source can act as a reducing agent to effectively address the problem that Mn²⁺ and Fe²⁺ are oxidized during the sintering process. In addition, those skilled in the art know how to determine the amount of raw materials used so that the molar amount of each element in the prepared lithium iron manganese phosphate material reaches the expected value.

In step S1, the solvent of the first slurry can be, for example, water and/or an organic solvent. Water is preferably the deionized water. Optional organic solvents include but are not limited to alcohol compounds with 1 to 10 carbon atoms, for example, it can be methanol, ethanol, n-propanol, 2-propanol, n-butanol, 2-methyl-2-propanol, n-pentanol, 2-methyl-1-butanol, and 2,2-dimethyl-1-1 propanol. The solvent of the first slurry is preferably water, as compared with organic solvents, water has a lower cost and has the advantages of environmental protection, low requirements for equipment, and high safety.

In some embodiments of the present disclosure, the solid content of the first slurry is 10% to 40%, for example, it can be 5%, 10%, 15%, 20%, 25%, 30%, 35%, 40% or a value between any two of the values described above, so as to enable the first slurry to have a suitable viscosity for subsequent grinding treatment.

In step S2, the purpose of the grinding treatment is to refine the raw material, which can improve the uniformity of subsequent spray drying and sintering treatment, and is beneficial to controlling the particle size of crystal growth during the sintering treatment. Grinding treatment methods include but are not limited to one or more of sand grinding, ball milling, mechanical stirring mill and jet mill. The process conditions of the grinding treatment can refer to the conventional conditions used in the art. For example, the sand grinding method is used for grinding, and the sand grinding is performed at a rotation speed of 200 r/min to 1000 r/min for 1 h to 6 h.

In step S3, the process conditions of the spray drying treatment may refer to conventional conditions used in the art.

In step S4, the purpose of the sintering treatment is to cause solid phase reaction of all raw materials to generate the lithium iron manganese phosphate. It should be noted that when the surface of the prepared lithium iron manganese phosphate material is provided with a carbon cladding layer, the sintering treatment is required to be carried out in an environment that is isolated from oxygen, for example, in an inert gas atmosphere. The inert gas includes but is not limited to one or more of nitrogen, argon, helium, argon, neon, krypton and xenon. When the surface of the prepared lithium iron manganese phosphate material is not provided with a carbon cladding layer, the sintering treatment can be performed in an atmosphere containing oxygen or in an inert gas atmosphere. The equipment used in the sintering treatment includes but is not limited to muffle furnaces, tube furnaces, rotary kilns, roller kilns or push plate kilns.

In order to obtain a lithium iron manganese phosphate material with a specific particle size, in some embodiments of the present disclosure, after the step of sintering treatment and before the step of obtaining the lithium iron manganese phosphate material, the method for preparing the lithium iron manganese phosphate material further includes the step: the sintered material obtained after completing the sintering treatment is pulverized, and then the pulverized material is passed through a 150-200 mesh screen for screening. The material passing through the screen is the lithium iron manganese phosphate material.

Regarding the laminated cell 101, it should be noted that the material of the positive electrode active material layer 101113 further includes a positive electrode binder and a positive electrode conductive agent. The material of the positive electrode current collector 101112, the positive electrode binder and the positive electrode conductive agent can be conventional materials in the art. For example: the material of the positive electrode current collector 101112 includes but is not limited to aluminum foil or composite aluminum foil; the positive electrode binder includes but is not limited to one or more of vinylidene fluoride/hexafluoropropylene copolymer, polyvinylidene fluoride, polyacrylonitrile, polymethyl methacrylate and polytetrafluoroethylene; the positive electrode conductive agent includes but is not limited to one or more of carbon black, graphite and graphene.

The method for preparing the positive electrode plate 10111 includes, for example, the following steps. The lithium iron manganese phosphate material, the positive electrode conductive agent, the positive electrode binder and the first solvent are mixed to obtain the first mixture. Then, the first mixture is coated on the positive electrode current collector 101112, and then the drying treatment process and the rolling process are performed in sequence to obtain the positive electrode plate 10111. It can be understood that the first mixture can also be cast on a separate carrier to form a film layer, and then the film layer is separated from the carrier, and then the film layer is laminated on the surface of the positive electrode current collector 101112. The first solvent includes but is not limited to N-methylpyrrolidone, dimethylformamide or ethylene glycol dimethyl ether.

The material of the negative electrode active material layer includes a negative electrode active substance, a negative electrode binder and a negative electrode conductive agent. The material of the negative electrode current collector, the negative electrode active substance, the negative electrode binder and the negative electrode conductive agent can be conventional materials in the art. For example: the material of the negative electrode current collector includes but is not limited to copper foil, composite copper foil or copper mesh. The negative electrode active substance includes but is not limited to one or more of lithium element; metals and semi-metals that can be alloyed with lithium; transition metal oxides, non-transition metal oxides and carbon materials. Metals or semi-metals that can be alloyed with lithium include but are not limited to Si, Sn, Al, Ge, Pb, Bi, Sb, Si-Y₁ alloy (Y₁ is an alkali metal, an alkaline earth metal, elements in group 13 to 16, a transition metal, a rare earth element, or a combination thereof except Si), and Sn-Y₂ alloys (Y₂ is an alkali metal, an alkaline earth metal, elements in group 13 to 16, a transition metal, a rare earth element, or a combination thereof except Sn). The transition metal oxides include but are not limited to one or more of lithium titanium oxide, vanadium oxide, lithium vanadium oxide and titanium niobium oxide. The non-transition metal oxides include but are not limited to one or more of SnO₂ and SiOₓ (0<x<2). The carbon material includes but is not limited to one or more of crystalline carbon (such as graphite) and amorphous carbon. The negative electrode binder is deionized water or can be the same as the positive electrode binder, and the negative electrode conductive agent can be the same as the positive electrode conductive agent. The method for preparing the negative electrode plate 10113 can be carried out by referring to the method for preparing the positive electrode plate 10111.

The material of the separator 10112 includes, but is not limited to, one or more of fiberglass, polyester, Teflon, polyethylene, polypropylene, and polytetrafluoroethylene.

The embodiments of the present disclosure further provide a prismatic lithium battery. As shown in FIG. 3, the prismatic lithium battery 10 includes one or more laminated cells 101 in any of the embodiments described above. One or more laminated cells 101 constitute the cell of the prismatic lithium battery 10.

In some embodiments of the present disclosure, the ratio of the length to the width of the prismatic lithium battery 10 is from 1.00 to 1.13. For example, it can be from 1.00 to 1.03, 1.00 to 1.05, 1.00 to 1.08, 1 .00 to 1.12, 1.06 to 1.07, or 1.06 to 1.13, examples are 1.00, 1.03, 1.05, 1.08, 1.10, 1.13 or a value between any two of the values described above.

The length of the prismatic lithium battery is selected from 165 mm to 185 mm. For example, it can be selected from 165 mm to 170 mm, 170 mm to 180 mm, 174 mm to 180 mm, 175 mm to 176 mm, or 180 mm to 185 mm, examples are 165 mm, 170 mm, 175 mm, 180 mm, 185 mm or a value between any two of the values described above. And/or, the width of the prismatic lithium battery is selected from 155 mm to 170 mm. For example, it can be selected from 160 mm to 170 mm, 160 mm to 165 mm, 164 mm to 165 mm, or 165 mm to 170 mm, examples are 155 mm, 160 mm, 165 mm, 170 mm or a value between any two of the values described above.

It should be noted that when the prismatic lithium battery 10 is used as a battery component of a battery pack in a vehicle, especially a commercial vehicle (including but not limited to a truck, a logistics vehicle or an engineering vehicle), the design of the length and width of the prismatic lithium battery 10 described above is conducive to improving the internal space utilization and endurance of the battery pack, and can take into account the structural strength and heat dissipation effect of the prismatic lithium battery 10 at the same time.

In some embodiments of the present disclosure, the ratio of the length to the thickness of the prismatic lithium battery 10 is from 3.4×10³ to 4.5×10³, for example, it can be from 3.4×10³ to 3.8×10³, 3.4×10³ to 4.0×10³, or 3.4×10³ to 4.3×10³, 3.8×10³ to 4.0×10³, 4.0×10³ to 4.1×10³, or 4.0×10³ to 4.5×10³, examples are 3.4×10³, 3.8×10³, 4.0×10³, 4.5×10³ or a value between any two of the values described above. The ratio of the width to the thickness of the prismatic lithium battery 10 is from 3.3×10² to 4.3×10², for example, it can be from 3.3×10³ to 3.5×10³, 3.3×10³ to 4.0×10³, 3.3×10³ to 4.3× 10³,3.7 ×10³ to 3.8×10³, 3.8×10³ to 4.0×10³, or 4.0×10³ to 4.3×10³, examples are 3.3×10³ , 3.8×10³, 4.0×10³, 4.3×10³ or a value between any two values described above.

The thickness of the prismatic lithium battery 10 is selected from 35 mm to 55 mm, for example, it can be selected from 35 mm to 40 mm, 35 mm to 45 mm, 35 mm to 50 mm, 40 mm to 45 mm, 40 mm to 50 mm, 43 mm to 44 mm, or 45 mm to 50 mm, examples are 35 mm, 40 mm, 43 mm, 44 mm, 45 mm, 50 mm, 55 mm or a value between any two of the values described above.

It should be noted that when the prismatic lithium battery 10 is used as a battery component of a battery pack in a vehicle, especially a commercial vehicle (including but not limited to a truck, a logistics vehicle or an engineering vehicle), the design of the ratio of length to thickness and the design of width to thickness of the prismatic lithium battery 10 can optimize the spatial distribution of energy for the prismatic lithium battery 10 in the battery pack. In addition, the design of the thickness of the prismatic lithium battery 10 described above can ensure that there is sufficient heat dissipation area between any two adjacent prismatic lithium batteries 10 in the battery pack, thereby ensuring the heat dissipation effect and reducing the volume ratio of a single prismatic lithium battery 10, which is conducive to the compact arrangement of multiple prismatic lithium batteries 10 in the battery pack.

It should be noted that the prismatic lithium battery 10 further includes other conventional structural members. For example, referring again to FIG. 1 and FIG. 3, the prismatic lithium battery 10 further includes a housing 102, a positive electrode pole 103 and a negative electrode pole 104. The positive electrode pole 103 and the negative electrode pole 104 are respectively disposed on the surface of the housing 102, and the laminated cells 101 are disposed in the housing 102. The material of the housing 102 is, for example, aluminum. The positive electrode tab 1012 and the positive electrode pole 103 are welded together through the connecting piece 105 by using a spot welding process to form the positive electrode of the prismatic lithium battery 10, and the negative electrode tab 1013 and the negative electrode pole 104 are welded together through the connecting piece 105 by using a spot welding process to form the negative electrode of the prismatic lithium battery 10.

In addition, the prismatic lithium battery 10 further includes electrolyte, and the laminated cell 101 is soaked in the electrolyte. The electrolyte may be composed of conventional components in the art. For example, the electrolyte includes a lithium salt and an organic solvent. The organic solvent may be for example a combination selected from two or more than two of ethylene carbonate; propylene carbonate; dimethyl carbonate; diethyl carbonate; ethyl methyl carbonate; trimethylene sulfite; ethyl acetate; diethyl sulfite; and 1,3-Propanesultone. The lithium salt is, for example, selected from one or more of LiPF₆, LiClO₄, LiBF₄, LiSbF₆, LiAsF₆, LiCF₃SO₃, Li(CF₃SO₂)₂N, LiC₄F₉SO₃, LiAlO₂, LiAlCl₄, LiODFB, LiTFSI, LiFSI, LiCl, LiI and LiN(CₓF₂ₓ₊₁SO₂)(C_{y}F_{2y+1}SO₂), wherein x and y are integers from 1 to 20 respectively, and an example of the proportion of the mass of lithium salt to the total mass of electrolyte is 10% to 15%.

In some embodiments of the present disclosure, the alternating current internal resistance of the cell (composed of one or more laminated cells 101) of the prismatic lithium battery 10 at 25°C is from 0.2 mΩ to 0.5 mΩ, and/or the energy density of the prismatic lithium battery is from 190 Wh/kg to 220 Wh/kg, and/or the capacity of the prismatic lithium battery is from 175 Ah to 250 Ah, and/or the voltage of the prismatic lithium battery is from 2.5 V to 4.2 V.

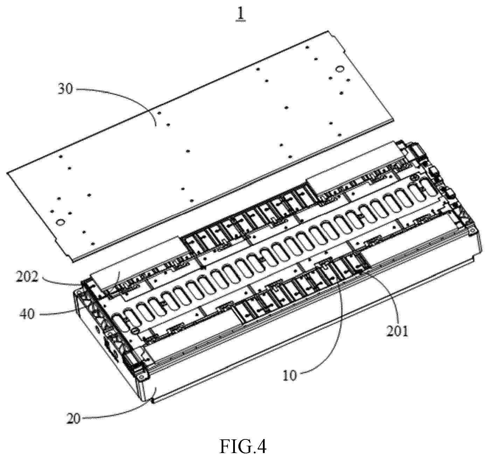

The embodiments of the present disclosure further provide a battery pack. As shown in FIG. 4, the battery pack 100 includes a box 20 and a plurality of prismatic lithium batteries 10 in any of the embodiments described above. The box 20 is provided with an accommodating space 201, and a plurality of prismatic lithium batteries 10 are arranged in the accommodating space 201 in sequence.

It should be noted that the battery pack 100 further includes other conventional structural members. For example, referring again to FIG. 4, the battery pack 100 further includes a cover body 30 and a buffer member 40. The cover body 30 is configured to cover the internal space of the box 20, and the buffer member 40 is disposed inside the box 20 and located on the box wall 202 of the box 20. It can be understood that the battery pack 100 may further include components such as a battery management system and a cooling device.

The embodiments of the present disclosure further provide an application of any one of the laminated battery cells described above, or any one of the prismatic lithium batteries described above, or any one of the battery packs described above, in a vehicle, wherein the battery cell, or the prismatic lithium battery, or the battery pack is used as the power source of the vehicle.

In some embodiments of the present disclosure, the vehicle is selected from a truck, a logistics vehicle or an engineering vehicle.

The technical solutions and technical effects of the present disclosure will be described in detail below through specific embodiments, comparative examples and experimental examples. The following embodiments are part of the examples of the present disclosure and do not specifically limit the present disclosure.

### Embodiment 1

This embodiment provides a prismatic lithium battery, as shown in FIG. 3, the prismatic lithium battery 10 includes a laminated cell 101, a housing 102, a positive electrode pole 103, and a negative electrode pole 104. The laminated cell 101 is disposed inside the housing 102, and the material of the housing 102 is, for example, aluminum. The positive electrode pole 103 and the negative electrode pole 104 are respectively disposed on the surface of the housing 102. As shown in FIG. 1, the laminated cell 101 includes 55 cell units 1011 stacked in sequence along the first direction X1. Each of the cell units 1011 includes a positive electrode plate 10111, a separator 10112 and a negative electrode plate 10113 that are stacked in sequence, and the first direction X1 is perpendicular to the first surface 101111 of the positive electrode plate 10111 close to the separator 10112. The sub-tabs 101110 of the positive electrode plates 10111 of all the cell units 1011 are connected in sequence to form the positive electrode tab 1012, and the sub-tabs 101110 of the negative electrode plates 10113 of all the cell units 1011 are connected in sequence to form the negative electrode tab 1013. Referring again to FIG. 3, the positive electrode tab 1012 and the negative electrode tab 1013 are respectively located at the opening of the housing 102. The positive electrode tab 1012 and the positive electrode pole 103 are welded together to form the positive electrode of the prismatic lithium battery 10. The negative electrode tab 1013 and the negative electrode pole 104 are welded together to form the negative electrode of the prismatic lithium battery 10. The prismatic lithium battery 10 further includes electrolyte, and the laminated cell 101 is soaked in the electrolyte.

As shown in FIG. 2, the positive electrode plate 10111 includes a positive electrode current collector 101112 and a positive electrode active material layer 101113. The positive electrode active material layer 101113 is disposed on the surface of the positive electrode current collector 101112. The material of the positive electrode current collector 101112 is a carbon-coated aluminum foil (having a thickness of 12 µm). The material of the positive active material layer 101113 includes Li_{0.96}Fe_{0.3}Mn_{0.6}Mg_{0.04}PO₄ clad with carbon material. The average thickness of the cladding layer is 3 nm. The mass of carbon material accounts for 1.5% of the total mass of the carbon material and Li_{0.96}Fe_{0.3}Mn_{0.6}Mg_{0.04}PO₄.

The method for preparing the positive electrode plate 10111 includes the following steps. According to the mass ratio of Li_{0.96}Fe_{0.3}Mn_{0.6}Mg_{0.04}PO₄ clad with the carbon material: conductive carbon black (Super PLL): carbon nanotube: polyvinylidene fluoride as 97:0.4:0.5:2.1, the above four raw materials are weighted, and the above four raw materials are mixed with N-Methylpyrrolidone evenly to obtain the positive electrode slurry, and the solid content of the positive electrode slurry is 65%. Then, the positive electrode slurry is coated on an aluminum foil with a thickness of 12 µm through a coating machine (with both surfaces being coated), and then the coated aluminum foil is baked and solidified at 120°C to form a positive electrode active material layer, and then is cold-pressed to a corresponding thickness by a roller press to obtain a positive electrode plate.

The method for preparing the Li_{0.96}Fe_{0.3}Mn_{0.6}V_{0.04}PO₄ clad with carbon material includes the following steps.
S1.1. 45.76 kg of manganese tetroxide, 45.25 kg of iron phosphate, 35.46 kg of lithium carbonate, 1.6 kg of magnesium oxide, 80.68 kg of phosphoric acid aqueous solution with a mass percentage of 85% and 2.72 kg of glucose are taken and added to the mixing machine to mix the raw materials, the mixing time is 2 h, and the mixed material are obtained. Then the mixed material is transferred to the sand mill, deionized water is added to the mixed material according to the mass ratio of the mass of the mixed material to the mass of the deionized water of 1:1.5, and the first slurry is obtained.
S1.2. Sand grinding treatment is performed on the first slurry to obtain the second slurry, the process parameters of the sand grinding treatment are that: rotation speed of the sand grinding is 500 r/min and the sand grinding time is 1.5 h.
S1.3. Spray drying treatment is performed on the second slurry, and it is ensured that the slurry is in a stirring state during the entire spray drying treatment to obtain the pre-sintering material. The particle size distribution range of the pre-sintering material is from 2 µm to 5 µm.
S1.4. The pre-sintering material is placed in the kiln, the protective gas N₂ is introduced, the flow rate of N₂ is 80 mL/min. Then the temperature is raised from room temperature to 750 °C at a heating rate of 5 °C/min, and the pre-sintering material is sintered at 750 °C for 6 h, and then cooled to room temperature to obtain the sintered material.
S1.5. An airflow crushing treatment and 150-mesh screen screening are performed in sequence on the sintered material. The treatment process of removing iron elements is performed on the material passing through the 150-mesh screen to obtain the Li_{0.96}Fe_{0.3}Mn0_{.6}V_{0. 04}PO₄ clad with carbon material.

The negative electrode plate 10113 includes a negative electrode current collector and a negative electrode active material layer. The negative electrode active material layer is disposed on the surface of the negative electrode current collector. The material of the negative electrode current collector is aluminum foil (with a thickness of 12 µm). The material of the negative electrode active material layer includes graphite. The method for preparing the negative electrode plate 10113 includes the following steps. According to a mass ratio of graphite: conductive carbon black (Super PLL): carboxymethyl cellulose: styrene-butadiene rubber of 97:0.7:1.25:1.05, the aforementioned four raw materials are weighted, the aforementioned four raw materials are mixed evenly with N-methylpyrrolidone to obtain a negative electrode slurry, and the solid content of the negative electrode slurry is 55%. Then, the negative electrode slurry is coated on an aluminum foil with a thickness of 8 µm by a coating machine (with both surfaces being coated), and then the coated aluminum foil is baked and solidified at 80°C to form a negative active material layer, and then is cold-pressed to the corresponding thickness by a roller press to obtain a negative electrode plate.

The method for preparing the electrolyte includes the following steps. According to the volume ratio of ethylene carbonate (EC): diethyl carbonate (DEC): ethyl methyl carbonate (EMC) of 4:3:3, the above three raw materials are mixed to obtain the solvent, and then LiPF₆ and additives are added to the solvent to mix evenly to obtain the electrolyte. The concentration of LiPF₆ in the electrolyte is 1.0 mol/L, the mass of the additives accounts for 10% of the total mass of the electrolyte. The additives consist of vinylene carbonate; 1,3-propanesultone; fluoroethylene carbonate and cyclohexylbenzene. The mass ratio of vinylene carbonate: 1,3-propanesultone: fluoroethylene carbonate: cyclohexylbenzene is 3:2:1:1.

The method for preparing the prismatic lithium battery 10 includes the following steps. A positive electrode plate 10111, a polypropylene PP separator 10112 having a thickness of 12 µm, and a negative electrode plate 10113 are laminated to form a cell unit 1011. 55 cell units 1011 are laminated to form a laminated cell 101. Two laminated cells 101 are assembled with an aluminum housing, then electrolyte is injected into the aluminum housing, and the prismatic lithium battery 10 is prepared after experiencing processes such as aging, formation, shaping, and packaging.

In this embodiment, the sizes of the positive electrode plate 10111 and the negative electrode plate 10113 are the same (the sizes of the positive electrode active material layer and the negative electrode active material layer are the same). In this embodiment, the sizes of the positive electrode plate 10111, the negative electrode plate 10113 and the prismatic lithium battery 10 are as shown in Table 1 below.

**Table 1**

| [Table 1_sm_0001] | |
|---|---|
| Items | Value |
| Length of the positive electrode plate (negative electrode plate) (mm) | 151 |
| Width of the positive electrode plate (negative electrode plate) (mm) | 148 |
| Thickness of the positive electrode plate (negative electrode plate) (µm) | 197 |
| Length of the prismatic lithium battery (mm) | 175 |
| Width of the prismatic lithium battery (mm) | 164 |
| Thickness of the prismatic lithium battery (mm) | 43 |

### Embodiment 2

This embodiment provides a prismatic lithium battery. Compared with the prismatic lithium battery provided in Embodiment 1, the only difference between the prismatic lithium battery in this embodiment and that in Embodiment 1 is that: the thickness of the positive electrode plate and the thickness of the negative electrode plate are replaced by "190 µm" respectively.

### Embodiment 3

This embodiment provides a prismatic lithium battery. Compared with the prismatic lithium battery provided in Embodiment 1, the only difference between the prismatic lithium battery in this embodiment and that in Embodiment 1 is that: the thickness of the positive electrode plate and the thickness of the negative electrode plate are replaced by "180 µm" respectively.

### Embodiment 4

This embodiment provides a prismatic lithium battery. Compared with the prismatic lithium battery provided in Embodiment 1, the only difference between the prismatic lithium battery in this embodiment and that in Embodiment 1 is that: the thickness of the positive electrode plate and the thickness of the negative electrode plate are replaced by "210 µm" respectively.

### Embodiment 5

This embodiment provides a prismatic lithium battery. Compared with the prismatic lithium battery provided in Embodiment 1, the only difference between the prismatic lithium battery in this embodiment and that in Embodiment 1 is that: the thickness of the positive electrode plate and the thickness of the negative electrode plate are replaced by "215 µm" respectively.

### Embodiment 6

This embodiment provides a prismatic lithium battery. Compared with the prismatic lithium battery provided in Embodiment 1, the only difference between the prismatic lithium battery in this embodiment and that in Embodiment 1 is that: the width of the positive electrode plate and the width of the negative electrode plate are replaced by "145 µm" respectively.

### Embodiment 7

This embodiment provides a prismatic lithium battery. Compared with the prismatic lithium battery provided in Embodiment 1, the only difference between the prismatic lithium battery in this embodiment and that in Embodiment 1 is that: the width of the positive electrode plate and the width of the negative electrode plate are replaced by "155 µm" respectively.

### Embodiment 8

This embodiment provides a prismatic lithium battery. Compared with the prismatic lithium battery provided in Embodiment 1, the only difference between the prismatic lithium battery in this embodiment and that in Embodiment 1 is that: the width of the positive electrode plate and the width of the negative electrode plate are replaced by "135 µm" respectively.

### Embodiment 9

This embodiment provides a prismatic lithium battery. Compared with the prismatic lithium battery provided in Embodiment 1, the only difference between the prismatic lithium battery in this embodiment and that in Embodiment 1 is that: the width of the positive electrode plate and the width of the negative electrode plate are replaced by "165 µm" respectively.

### Embodiment 10

This embodiment provides a prismatic lithium battery. Compared with the prismatic lithium battery provided in Embodiment 1, the only difference between the prismatic lithium battery in this embodiment and that in Embodiment 1 is that: the length of the positive electrode plate and the length of the negative electrode plate are replaced by "145 µm" respectively.

### Embodiment 11

This embodiment provides a prismatic lithium battery. Compared with the prismatic lithium battery provided in Embodiment 1, the only difference between the prismatic lithium battery in this embodiment and that in Embodiment 1 is that: the length of the positive electrode plate and the length of the negative electrode plate are replaced by "155 µm" respectively.

### Embodiment 12

This embodiment provides a prismatic lithium battery. Compared with the prismatic lithium battery provided in Embodiment 1, the only difference between the prismatic lithium battery in this embodiment and that in Embodiment 1 is that: the length of the positive electrode plate and the length of the negative electrode plate are replaced by "135 µm" respectively.

### Embodiment 13

This embodiment provides a prismatic lithium battery. Compared with the prismatic lithium battery provided in Embodiment 1, the only difference between the prismatic lithium battery in this embodiment and that in Embodiment 1 is that: the length of the positive electrode plate and the length of the negative electrode plate are replaced by "165 µm" respectively.

### Embodiment 14

This embodiment provides a prismatic lithium battery. Compared with the prismatic lithium battery provided in Embodiment 1, the only difference between the prismatic lithium battery in this embodiment and that in Embodiment 1 is that: the length of the positive electrode plate and the length of the negative electrode plate are replaced by "145 µm" respectively, and the width of the positive electrode plate and the width of the negative electrode plate are replaced by "140 µm" respectively.

### Embodiment 15

This embodiment provides a prismatic lithium battery. Compared with the prismatic lithium battery provided in Embodiment 1, the only difference between the prismatic lithium battery in this embodiment and that in Embodiment 1 is that: the length of the positive electrode plate and the length of the negative electrode plate are replaced by "150 µm" respectively, and the width of the positive electrode plate and the width of the negative electrode plate are replaced by "140 µm" respectively.

### Embodiment 16

This embodiment provides a prismatic lithium battery. Compared with the prismatic lithium battery provided in Embodiment 1, the only difference between the prismatic lithium battery in this embodiment and that in Embodiment 1 is that: the length of the positive electrode plate and the length of the negative electrode plate are replaced by "155 µm" respectively, and the width of the positive electrode plate and the width of the negative electrode plate are replaced by "155 µm" respectively.

### Embodiment 17

This embodiment provides a prismatic lithium battery. Compared with the prismatic lithium battery provided in Embodiment 1, the only difference between the prismatic lithium battery in this embodiment and that in Embodiment 1 is that: the length of the positive electrode plate and the length of the negative electrode plate are replaced by "165 µm" respectively, and the width of the positive electrode plate and the width of the negative electrode plate are replaced by "135 µm" respectively.

### Embodiment 18

This embodiment provides a prismatic lithium battery. Compared with the prismatic lithium battery provided in Embodiment 1, the only difference between the prismatic lithium battery in this embodiment and that in Embodiment 1 is that: the thickness of the prismatic lithium battery is replaced by "35 µm".

### Embodiment 19

This embodiment provides a prismatic lithium battery. Compared with the prismatic lithium battery provided in Embodiment 1, the only difference between the prismatic lithium battery in this embodiment and that in Embodiment 1 is that: the thickness of the prismatic lithium battery is replaced by "55 µm".

### Embodiment 20

This embodiment provides a prismatic lithium battery. Compared with the prismatic lithium battery provided in Embodiment 1, the only difference between the prismatic lithium battery in this embodiment and that in Embodiment 1 is that: the thickness of the prismatic lithium battery is replaced by "40 µm".

### Embodiment 21

This embodiment provides a prismatic lithium battery. Compared with the prismatic lithium battery provided in Embodiment 1, the only difference between the prismatic lithium battery in this embodiment and that in Embodiment 1 is that: the thickness of the prismatic lithium battery is replaced by "50 µm".

### Embodiment 22

This embodiment provides a prismatic lithium battery. Compared with the prismatic lithium battery provided in Embodiment 1, the only difference between the prismatic lithium battery in this embodiment and that in Embodiment 1 is that: the width of the prismatic lithium battery is replaced by "170 µm".

### Embodiment 23

This embodiment provides a prismatic lithium battery. Compared with the prismatic lithium battery provided in Embodiment 1, the only difference between the prismatic lithium battery in this embodiment and that in Embodiment 1 is that: the width of the prismatic lithium battery is replaced by "155 µm".

### Embodiment 24

This embodiment provides a prismatic lithium battery. Compared with the prismatic lithium battery provided in Embodiment 1, the only difference between the prismatic lithium battery in this embodiment and that in Embodiment 1 is that: the length of the prismatic lithium battery is replaced by "165 µm".

### Embodiment 25

This embodiment provides a prismatic lithium battery. Compared with the prismatic lithium battery provided in Embodiment 1, the only difference between the prismatic lithium battery in this embodiment and that in Embodiment 1 is that: the length of the prismatic lithium battery is replaced by "185 µm".

### Embodiment 26

This embodiment provides a prismatic lithium battery. Compared with the prismatic lithium battery provided in Embodiment 1, the only difference between the prismatic lithium battery in this embodiment and the prismatic lithium battery provided in Embodiment 1 is that: the "Li_{0.96}Fe_{0.3}Mn_{0.6}Mg_{0.04}PO₄" in the positive active material layer 101113 is replaced with "Li_{0.96}Fe_{0.3}Mn_{0.6}V_{0.04}PO₄".

The method for preparing Li_{0.96}Fe_{0.3}Mn_{0.6}V_{0.04}PO₄ includes the step: the "1. 6 kg of magnesium oxide" in step S1.1 is replaced with "3 kg of vanadium trioxide".

### Embodiment 27

This embodiment provides a prismatic lithium battery. Compared with the prismatic lithium battery provided in Embodiment 1, the only difference between the prismatic lithium battery in this embodiment and the prismatic lithium battery provided in Embodiment 1 is that: the "Li_{0.96}Fe_{0.3}Mn_{0.6}Mg_{0.04}PO₄" in the positive active material layer 101113 is replaced with "Li_{0.96}Fe_{0.3}Mn_{0.6}Mg_{0.02}V_{0.02}PO₄".

The method for preparing Li_{0.96}Fe_{0.3}Mn_{0.6}Mg_{0.02}V_{0.02}PO₄ includes the step: the "1.6 kg of magnesium oxide" in step S1.1 is replaced with "0.8 kg of magnesium oxide and 1.5 kg of vanadium trioxide".

### Comparative example 1

This comparative example provides a prismatic lithium battery. Compared with the prismatic lithium battery provided in Embodiment 1, the only difference between the prismatic lithium battery in this comparative example and the prismatic lithium battery provided in Embodiment 1 is that: the thickness of the positive electrode plate and the thickness of the negative electrode plate are respectively replaced by "250 µm".

### Comparative example 2

This comparative example provides a prismatic lithium battery. Compared with the prismatic lithium battery provided in Embodiment 1, the only difference between the prismatic lithium battery in this comparative example and the prismatic lithium battery provided in Embodiment 1 is that: the width of the positive electrode plate and the width of the negative electrode plate are respectively replaced by "110 µm".

### Comparative example 3

This comparative example provides a prismatic lithium battery. Compared with the prismatic lithium battery provided in Embodiment 1, the only difference between the prismatic lithium battery in this comparative example and the prismatic lithium battery provided in Embodiment 1 is that: the length of the positive electrode plate and the length of the negative electrode plate are respectively replaced by "110 µm".

### Comparative example 4

This comparative example provides a prismatic lithium battery. Compared with the prismatic lithium battery provided in Embodiment 1, the only difference between the prismatic lithium battery in this comparative example and the prismatic lithium battery provided in Embodiment 1 is that: the width of the prismatic lithium battery is replaced by "140 µm".

### Comparative example 5

This comparative example provides a prismatic lithium battery. Compared with the prismatic lithium battery provided in Embodiment 1, the only difference between the prismatic lithium battery in this comparative example and the prismatic lithium battery provided in Embodiment 1 is that: the length of the prismatic lithium battery is replaced by "150 µm".

### Experimental example 1

The alternating current internal resistance of the cells of the prismatic lithium batteries in Embodiment 1 to Embodiment 17, Embodiment 26 as well as Comparative Example 1 to Comparative Example 3 are respectively tested (at 25°C). The test results are shown in Table 2 below.

**Table 2**

| [Table 1_sm_0002] | |
|---|---|
| Serial number | Alternating current internal resistance of the cell (mΩ) |
| Embodiment 1 | 0.31 |
| Embodiment 2 | 0.29 |
| Embodiment 3 | 0.26 |
| Embodiment 4 | 0.33 |
| Embodiment 5 | 0.34 |
| Embodiment 6 | 0.31 |
| Embodiment 7 | 0.32 |
| Embodiment 8 | 0.28 |
| Embodiment 9 | 0.37 |
| Embodiment 10 | 0.30 |
| Embodiment 11 | 0.31 |
| Embodiment 12 | 0.27 |
| Embodiment 13 | 0.33 |
| Embodiment 14 | 0.29 |
| Embodiment 15 | 0.31 |
| Embodiment 16 | 0.33 |
| Embodiment 17 | 0.32 |
| Embodiment 26 | 0.31 |
| Embodiment 27 | 0.28 |
| Comparative example 1 | 0.62 |
| Comparative example 2 | 0.38 |
| Comparative example 3 | 0.37 |

As can be seen from Table 2, compared with the alternating current internal resistance (at 25°C) of the cells of the prismatic lithium batteries in Comparative example 1 to Comparative example 3, the alternating current internal resistance (at 25°C) of the cells of the prismatic lithium batteries in Embodiment 1 to Embodiment 26 are smaller.

### Experimental example 2

Electrical performance tests and thermal runaway tests are respectively performed on the prismatic lithium batteries in Embodiment 1 to Embodiment 26 and Comparative Example 1 to Comparative Example 5. The method of the electrical performance test includes the following step. Each prismatic lithium battery is charged at a constant current and constant voltage of 0.2C rate to 4.2V at 25 °C, with a cut-off current of 0.02C for constant voltage charging. Then the prismatic lithium battery is discharged at a constant current of 0.2C until the voltage reaches 2.5V. The first discharge capacity and the first charge capacity at 25 °C and 0.2C rate are obtained, and the first charge-discharge efficiency (ratio of first discharge capacity to first charge capacity × 100%) of each prismatic lithium battery at 25 °C and 0.2C rate is calculated. The testing method of the thermal runaway test is carried out according to the thermal runaway testing method in Appendix A of GB38032-2020.

The test results are shown in Table 3 below.

**Table 3**

| [Table 1_sm_0003] | | | | | | |
|---|---|---|---|---|---|---|
| Serial number | First charging capacity (mAh/g) | First discharge capacity (mAh/g) | First charge-discharge | | Thermal runaway test | |
| | | | | Efficiency (%) | | |
| Embodiment 1 | 139.32 | 158.5 | | 87.9 | | pass |
| Embodiment 2 | 139.44 | 157.2 | | 88.7 | | pass |
| Embodiment 3 | 139.35 | 155.7 | | 89.5 | | pass |
| Embodiment 4 | 138.71 | 159.8 | | 86.8 | | pass |
| Embodiment 5 | 136.74 | 160.3 | | 85.3 | | pass |
| Embodiment 6 | 135.12 | 160.1 | | 84.4 | | pass |
| Embodiment 7 | 136.00 | 162.1 | | 83.9 | | pass |
| Embodiment 8 | 131.30 | 162.9 | | 80.6 | | pass |
| Embodiment 9 | 137.23 | 158.1 | | 86.8 | | pass |
| Embodiment 10 | 139.11 | 157.9 | | 88.1 | | pass |
| Embodiment 11 | 138.82 | 159.2 | | 87.2 | | pass |
| Embodiment 12 | 132.80 | 153.7 | | 86.4 | | pass |
| Embodiment 13 | 128.56 | 160.5 | | 80.1 | | pass |
| Embodiment 14 | 137.43 | 157.6 | | 87.2 | | pass |
| Embodiment 15 | 138.02 | 157.2 | | 87.8 | | pass |
| Embodiment 16 | 140.34 | 158.4 | | 88.6 | | pass |
| Embodiment 17 | 137.56 | 159.4 | | 86.3 | | pass |
| Embodiment 18 | 137.57 | 157.4 | | 87.4 | | pass |
| Embodiment 19 | 140.84 | 161.7 | | 87.1 | | pass |
| Embodiment 20 | 137.85 | 157.9 | | 87.3 | | pass |
| Embodiment 21 | 138.46 | 158.6 | | 87.3 | | pass |
| Embodiment 22 | 133.74 | 156.6 | | 85.4 | | pass |
| Embodiment 23 | 131.00 | 154.3 | | 84.9 | | pass |
| Embodiment 24 | 137.51 | 158.6 | | 86.7 | | pass |
| Embodiment 25 | 135.18 | 155.2 | | 87.1 | | pass |
| Embodiment 26 | 139.37 | 158.2 | | 88.1 | | pass |
| Embodiment 27 | 143.69 | 159.3 | | 90.2 | | pass |
| Comparative example 1 | 124.88 | 164.1 | | 76.1 | | pass |
| Comparative example 2 | 120.58 | 154.2 | | 78.2 | | pass |
| Comparative example 3 | 115.14 | 152.3 | | 75.6 | | pass |
| Comparative example 4 | 114.63 | 156.6 | | 73.2 | | failed |
| Comparative example 5 | 115.77 | 157.3 | | 73.6 | | failed |

As can be seen from Table 2 and Table 3, compared with the prismatic lithium batteries in Comparative Example 1 to Comparative Example 5, the prismatic lithium batteries in Embodiment 1 to Embodiment 26 have better overall performance. It can be seen that in prismatic lithium battery, by respectively controlling the length of the positive electrode plate and the length of the negative electrode plate within the range of 135 mm to 165 mm, respectively controlling the width of the positive electrode plate and the width of the negative electrode plate within the range of 135 mm to 165 mm, respectively controlling the thickness of the positive electrode plate and the thickness of the negative electrode plate within the range of 190 µm to 210 µm, respectively controlling the length of the prismatic lithium battery within the range of 165 mm to 185 mm, respectively controlling the width of the prismatic lithium battery within the range of 155 mm to 170 mm, and respectively controlling the thickness of the prismatic lithium battery within the range of 35 mm to 55 mm, it is ensured that the cell of the prismatic lithium battery has acceptable internal resistance, and which can improve the actual capacity, energy density, rate performance and cycle stability of the prismatic lithium battery, and the prismatic lithium battery has good safety.

## Claims

1. A laminated cell, wherein the laminated cell comprises a plurality of cell units stacked in sequence along a first direction, each of the cell units comprises a positive electrode plate, a separator and a negative electrode plate that are stacked in sequence, and a separator is disposed between two adjacent ones of the cell units, the first direction is perpendicular to a first surface of the positive electrode plate close to the separator, the positive electrode plate of each of the cell units is provided with a sub-tab, and the negative electrode plate of each of the cell units is provided with a sub-tab; a plurality of sub-tabs of a plurality of positive electrode plates of the plurality of cell units are connected in sequence to form a positive electrode tab, and a plurality of sub-tabs of a plurality of negative electrode plates of the plurality of cell units are connected in sequence to form a negative electrode tab; and
wherein a ratio of a length to a thickness of the positive electrode plate and a ratio of a length to a thickness of the negative electrode plate are respectively and independently selected from 6.3×10² to 9.4×10², and a ratio of a width to the thickness of the positive electrode plate and a ratio of a width to the thickness of the negative electrode plate are respectively and independently selected 6.3×10² to 9.4×10².

2. The laminated cell according to claim 1, wherein the length of the positive electrode plate and the length of the negative electrode plate are respectively and independently selected from 135 mm to 165 mm, and the width of the positive electrode plate and the width of the negative electrode plate are respectively and independently selected from 135 mm to 165 mm; and/or
the thickness of the positive electrode plate and the thickness of the negative electrode plate are respectively and independently selected from 180 µm to 215 µm; and/or
a size of the positive electrode plate is same as a size of the negative electrode plate.

3. The laminated cell according to claim 1 or 2, wherein the length of the positive electrode plate and the length of the negative electrode plate are from 145 mm to 155 mm respectively; and/or
the width of the positive electrode plate and the width of the negative electrode plate are from 145 mm to 155 mm respectively; and/or
the ratio of the length to the thickness of the positive electrode plate and the ratio of the length to the thickness of the negative electrode plate are from 7.7×10² to 8.5×10² respectively; and/or
the ratio of the width to thickness of the positive electrode plate and the ratio of the width to the thickness of the negative electrode plate are respectively from 7.7×10² to 8.5×10²; and/or
the thickness of the positive electrode plate and the thickness of the negative electrode plate are respectively and independently selected from 190 µm to 210 µm.

4. The laminated cell according to any one of claims 1 to 3, wherein the positive electrode plate comprises a positive electrode current collector and a positive electrode active material layer disposed on a surface of the positive electrode current collector; a material of the positive electrode active material layer comprises lithium iron manganese phosphate material, and a general chemical formula of the lithium iron manganese phosphate material is LiₐMnₓFe_{y}M_{z}(PO₄)_{b}, wherein a, x, y, z and b respectively represent a molar amount of a corresponding element, a value of a sum of x, y and z is c, and M is selected from one or more of Mg, Ca, Sr, Co, Ti, Zr, Mo, V, Nb, Nd, Y, Ni, Sc, Cr, Cu, Zn, Be, La and Al;
wherein 0.10≤x≤0.70, 0.01≤z≤0.12; a ratio of a to c is a/c, and 1.01≤a/c≤1.10; a ratio of a to b is a/b, and 0.95<a/b<1.10; a ratio of c to b is c/b, and 0.90<c/b<1.10.

5. The laminated cell according to claim 4, wherein in the lithium iron manganese phosphate material, 0.26≤x≤0.68, and/or 0.01≤z≤0.05, and/or 1.015≤a/c ≤1.035, and/or 0.95<a/b<1.03, and/or 0.90<c/b<1.02; and/or
a surface of the lithium iron manganese phosphate material is provided with a cladding layer, a material of the cladding layer comprises a carbon material, and a mass of the carbon material accounts for 0.5%~3% of a sum of masses of the carbon material and the lithium iron manganese phosphate material.

6. A prismatic lithium battery, wherein the prismatic lithium battery comprises one or more laminated cells, each of the one or more laminated cells comprises a plurality of cell units stacked in sequence along a first direction, each of the cell units comprises a positive electrode plate, a separator and a negative electrode plate that are stacked in sequence, and a separator is disposed between two adjacent ones of the cell units, the first direction is perpendicular to a first surface of the positive electrode plate close to the separator, the positive electrode plate of each of the cell units is provided with a sub-tab, and the negative electrode plate of each of the cell units is provided with a sub-tab; a plurality of sub-tabs of a plurality of positive electrode plates of the plurality of cell units are connected in sequence to form a positive electrode tab, and a plurality of sub-tabs of a plurality of negative electrode plates of the plurality of cell units are connected in sequence to form a negative electrode tab; and
wherein a ratio of a length to a thickness of the positive electrode plate and a ratio of a length to a thickness of the negative electrode plate are respectively and independently selected from 6.3×10² to 9.4×10², and a ratio of a width to the thickness of the positive electrode plate and a ratio of a width to the thickness of the negative electrode plate are respectively and independently selected from 6.3×10² to 9.4×10².

7. The prismatic lithium battery according to claim 6, wherein the length of the positive electrode plate and the length of the negative electrode plate are respectively and independently selected from 135 mm to 165 mm, and the width of the positive electrode plate and the width of the negative electrode plate are respectively and independently selected from 135 mm to 165 mm; and/or
the thickness of the positive electrode plate and the thickness of the negative electrode plate are respectively and independently selected from 180 µm to 215 µm; and/or
a size of the positive electrode plate is same as a size of the negative electrode plate; and/or
wherein the positive electrode plate comprises a positive electrode current collector and a positive electrode active material layer disposed on a surface of the positive electrode current collector; a material of the positive electrode active material layer comprises lithium iron manganese phosphate material, and a general chemical formula of the lithium iron manganese phosphate material is LiₐMnₓFe_{y}M_{z}(PO₄)_{b}, wherein a, x, y, z and b respectively represent a molar amount of a corresponding element, a value of a sum of x, y and z is c, and M is selected from one or more of Mg, Ca, Sr, Co, Ti, Zr, Mo, V, Nb, Nd, Y, Ni, Sc, Cr, Cu, Zn, Be, La and Al; wherein 0.10≤x≤0.70, 0.01≤z≤0.12; a ratio of a to c is a/c, and 1.01≤a/c≤1.10; a ratio of a to b is a/b, and 0.95<a/b<1.10; a ratio of c to b is c/b, and 0.90<c/b<1.10.

8. The prismatic lithium battery according to claim 6 or 7, wherein a ratio of a length to a width of the prismatic lithium battery is from 1.00 to 1.13, and a ratio of the length to a thickness of the prismatic lithium battery is from 3.4×10³ to 4.5 ×10³, and a ratio of the width to the thickness of the prismatic lithium battery is from 3.3×10² to 4.3×10²; and/or
the prismatic lithium battery further comprises a housing, and the one or more laminated cells are disposed in the housing; and/or
an alternating current internal resistance of a cell of the prismatic lithium battery at 25°C is from 0.2 mΩ to 0.5 mΩ, and/or an energy density of the prismatic lithium battery is from 190 Wh/kg to 220 Wh/kg, and/or a capacity of the prismatic lithium battery is from 175 Ah to 250 Ah, and/or a voltage of the prismatic lithium battery is from 2.5 V to 4.2 V.

9. The prismatic lithium battery according to any one of claims 6 to 8, wherein a ratio of a length to a width of the prismatic lithium battery is from 1.06 to 1.07; and/or
a ratio of the length to a thickness of the prismatic lithium battery is from 4.0×10³ to 4.1×10³; and/or
a ratio of the width to the thickness of the prismatic lithium battery is from 3.7×10² to 3.8×10²; and/or
the length of the prismatic lithium battery is selected from 165 mm to 185 mm; and/or
the width of the prismatic lithium battery is selected from 155 mm to 170 mm; and/or
the thickness of the prismatic lithium battery is selected from 35 mm to 55 mm.

10. The prismatic lithium battery according to any one of claims 6 to 9, wherein a length of the prismatic lithium battery is selected from 170 mm to 180 mm; and/or
a width of the prismatic lithium battery is selected from 160 mm to 170 mm; and/or
a thickness of the prismatic lithium battery is selected from 40 mm to 50 mm.

11. The prismatic lithium battery according to any one of claims 6 to 10, wherein a length of the prismatic lithium battery is selected from 174 mm to 180 mm; and/or
a width of the prismatic lithium battery is selected from 160 mm to 165 mm; and/or
a thickness of the prismatic lithium battery is selected from 40 mm to 45 mm.

12. A battery pack, wherein the battery pack comprises a box and a plurality of prismatic lithium batteries, the box is provided with an accommodating space, and the plurality of prismatic lithium batteries are arranged in sequence in the accommodating space;
wherein each of the prismatic lithium batteries comprises one or more laminated cells, each of the one or more laminated cells comprises a plurality of cell units stacked in sequence along a first direction, each of the cell units comprises a positive electrode plate, a separator and a negative electrode plate that are stacked in sequence, and a separator is disposed between two adjacent ones of the cell units, the first direction is perpendicular to a first surface of the positive electrode plate close to the separator, the positive electrode plate of each of the cell units is provided with a sub-tab, and the negative electrode plate of each of the cell units is provided with a sub-tab; a plurality of sub-tabs of a plurality of positive electrode plates of the plurality of cell units are connected in sequence to form a positive electrode tab, and a plurality of sub-tabs of a plurality of negative electrode plates of the plurality of cell units are connected in sequence to form a negative electrode tab; and
wherein a ratio of a length to a thickness of the positive electrode plate and a ratio of a length to a thickness of the negative electrode plate are respectively and independently selected from 6.3×10² to 9.4×10², and a ratio of a width to the thickness of the positive electrode plate and a ratio of a width to the thickness of the negative electrode plate are respectively and independently selected from 6.3×10² to 9.4×10².

13. The battery pack according to claim 12, wherein the length of the positive electrode plate and the length of the negative electrode plate are respectively and independently selected from 135 mm to 165 mm, and the width of the positive electrode plate and the width of the negative electrode plate are respectively and independently selected from 135 mm to 165 mm; and/or
the thickness of the positive electrode plate and the thickness of the negative electrode plate are respectively and independently selected from 180 µm to 215 µm; and/or
a size of the positive electrode plate is same as a size of the negative electrode plate; and/or
wherein the positive electrode plate comprises a positive electrode current collector and a positive electrode active material layer disposed on a surface of the positive electrode current collector; a material of the positive electrode active material layer comprises lithium iron manganese phosphate material, and a general chemical formula of the lithium iron manganese phosphate material is LiₐMnₓFe_{y}M_{z}(PO₄)_{b}, wherein a, x, y, z and b respectively represent a molar amount of a corresponding element, a value of a sum of x, y and z is c, and M is selected from one or more of Mg, Ca, Sr, Co, Ti, Zr, Mo, V, Nb, Nd, Y, Ni, Sc, Cr, Cu, Zn, Be, La and Al; wherein 0.10≤x≤0.70, 0.01≤z≤0.12; a ratio of a to c is a/c, and 1.01≤a/c≤1.10; a ratio of a to b is a/b, and 0.95<a/b<1.10; a ratio of c to b is c/b, and 0.90<c/b<1.10.

14. The battery pack according to claim 12 or 13, wherein a ratio of a length to a width of each of the prismatic lithium batteries is from 1.00 to 1.13, and a ratio of the length to a thickness of each of the prismatic lithium batteries is from 3.4×10³ to 4.5 ×10³, and a ratio of the width to the thickness of each of the prismatic lithium batteries is from 3.3×10² to 4.3×10²; and/or
wherein each of the prismatic lithium batteries further comprises a housing, and the one or more laminated cells are disposed in the housing; and/or
an alternating current internal resistance of a cell of each of the prismatic lithium batteries at 25°C is from 0.2 mΩ to 0.5 mΩ, and/or an energy density of each of the prismatic lithium batteries is from 190 Wh/kg to 220 Wh/kg, and/or a capacity of each of the prismatic lithium batteries is from 175 Ah to 250 Ah, and/or a voltage of each of the prismatic lithium batteries is from 2.5 V to 4.2 V; and/or
a length of each of the prismatic lithium batteries is selected from 165 mm to 185 mm; and/or
a width of each of the prismatic lithium batteries is selected from 155 mm to 170 mm; and/or
a thickness of each of the prismatic lithium batteries is selected from 35 mm to 55 mm.

15. The battery pack according to any one of claims 12 to 14, wherein the battery pack is used as a power source for a vehicle.

16. The battery pack according to claim 15, wherein the vehicle is selected from a truck, a logistics vehicle or an engineering vehicle.
